# EUROPÄISCHE PATENTANMELDUNG

(11) **EP 1 420 230 A2**
(43) Veröffentlichungstag der Anmeldung: **19.05.2004**
(21) Anmeldenummer: 03025292.8
(22) Anmeldetag: 06.11.2003
(51) Int. Cl.: G01F 11/28, B01D 3/42, C12G 3/12

(54) **Volumenzähler für Verschlussbrennerei**

(30) Priorität: 12.11.2002 DE 10252870
(71) Anmelder: Kothe, Ulrich, D-73054 Eislingen (DE)
(72) Erfinder: Kothe, Ulrich, D-73054 Eislingen (DE)
(74) Vertreter: Fürst, Siegfried

(57) **Zusammenfassung**

Die vorliegende Erfindung beschreibt einen Volumenzähler (1), der insbesondere in staatlich kontrollierten Verschlussbrennereien zur erforderlichen Erfassung der gebrannten Alkoholmengen hinsichtlich Volumen und Alkoholgehalt vorgeschrieben ist. Dabei wird in einem Volumenbehälter (4) ein definiertes Volumen des gebrannten Alkohol/Wassergemischs abgemessen und einem außerhalb des Volumenzählers (1) angeordneten Auffangbehälter zugeführt. Der Volumenzähler (1) kann auch eine Entnahmevorrichtung für Proben umfassen, mit der eine Probe des Alkohol/Wassergemischs dem Volumenbehälter (4) entnommen und in einem Proben-Sammelbehälter (5) aufgefangen wird. Hierbei kann auch eine Messung der Temperatur und/oder der Dichte des Alkohol/Wassergemischs erfolgen. Zur Verbesserung der Messgenauigkeit des Volumenzählers (1) ist vorgeschlagen, dass vor der Zuführung des Alkohol/Wassergemischs in den Volumenbehälter (4) eine vorherige Durchmischung in einem in Durchflussrichtung des Alkohol/Wassergemischs dem Volumenbehälter (4) vorgeschalteten Mischbehälter (10) erfolgt. Diese Durchmischung kann auch in einer gemeinsamen Sammelleitung (22) für mehrere Volumenbehälter (4, 4a) durchgeführt werden. Des Weiteren kann an einem Gehäuse (9) des Volumenzählers (1) ein Lüfter (23) zur Durchlüftung des Gehäuseinneren des Volumenzählers (1) vorgesehen sein, um die Explosionsgefahr durch Alkoholdämpfe zu unterbinden.

## Beschreibung

Die vorliegende Erfindung beschreibt einen Volumenzähler für Verschlussbrennereien nach dem Oberbegriff des Patentanspruchs 1. Brennereinen für Branntwein unterliegen strengen staatlichen und insbesondere steuerlichen Kontrollen. So sind die Betreiber der Verschlussbrennereinen durch Gesetze gezwungen, die Menge an erzeugtem Branntwein sowohl hinsichtlich des Volumens als auch des Alkoholgehalts genauestens zu erfassen. Die entsprechenden Regelungen werden von der Bundesmonopolverwaltung überwacht und die entsprechenden Messgeräte gegebenenfalls von der Physikalisch Technischen Bundesanstalt geeicht.

Mit den gattungsgemäßen Volumenzählern wird einerseits das absolute Volumen des Branntweins, der in einer normalerweise ebenfalls plombierten Vorlage erzeugt wird, gemessen sowie ebenfalls die Dichte und Temperatur, wobei mit entsprechenden Umrechnungsfaktoren der jeweilige absolute Alkoholgehalt bestimmbar ist.

Dazu verfügen die Volumenzähler über einen Zulauf von der Vorlage zu einem Volumenbehälter in dem Volumenzähler; das Alkohol/Wassergemisch fließt hier im allgemeinen drucklos in den Volumenzähler. Der Volumenbehälter für das Alkohol/Wassergemisch hat ein definiertes Volumen. Nachdem der Volumenbehälter vollständig gefüllt ist, wird er zum überwiegenden Teil über einen Ablauf in einen außerhalb des Volumenzählers angeordneten Mittellaufbehälter entleert.

Gleichzeitig kann mit einer Entnahmevorrichtung dem Volumenbehälter eine geringfügige Menge des Alkohol/Wassergemischs als Probe entnommen und einem Proben-Sammelbehälter im Volumenzähler zugeführt werden. Übliche Volumina sind hierbei ca. 1 Liter für den Volumenbehälter und 2 cm³ für eine Probe. An geeigneter Stelle der Entnahmevorrichtung kann ein Thermometer zur Erfassung der Temperatur und gegebenenfalls eine Einrichtung zur Erfassung der Dichte der Probe angeordnet sein. Ein nicht so genaues Ergebnis wird erhalten, wenn lediglich ein Thermometer an dem Proben-Sammelbehälter angeordnet ist und nach mehreren Probeentnahmen wiederum die mittlere Dichte des Alkohol/Wassergemischs im Proben-Sammelbehälter gemessen wird.

Als nachteilig hierbei hat sich erwiesen, dass einerseits durch die oftmals stark differierende Konzentration des Alkohol/Wassergemischs während eines Brenndurchgangs eine Entmischung verschiedener Phasen mit unterschiedlichen Dichten des Alkohol/Wassergemischs z.B. in dem Volumenbehälter auftreten kann, insbesondere wenn die Absolutmenge des zuströmenden Alkohol/Wassergemischs am Anfang oder Ende des Brennvorgangs sehr gering ist. Dadurch werden bei der Entnahme einer Probe oftmals falsche Messergebnisse erhalten, die nicht der realen Dichte des Alkohol/Wassergemischs im Volumenbehälter entsprechen.

Des Weiteren ist es aufgrund der Brennbarkeit insbesondere von gasförmigem Alkohol notwendig, sämtliche elektrischen Einrichtungen in dem Volumenzähler, die zur Steuerung desselben notwendig sind, explosionsgeschützt auszuführen, da es nicht auszuschließen ist, dass es im Inneren, des in der Regel plombierten Gehäuses, des Volumenzählers zu einer kritischen Konzentration an gasförmigem Alkohol kommt, der durch einen elektrischen Funken entzündet werden kann.

Ausgehend von diesem Stand der Technik ist der Fachmann vor die Aufgabe gestellt, einen Volumenzähler für Verschlussbrennereien dahingehend zu verbessern, dass einerseits die Messgenauigkeit des Volumenzählers erhöht ist und andererseits der Volumenzähler in einfacherer, wirtschaftlicherer und dennoch explosionssicherer Weise ausführbar ist.

Gelöst werden diese Aufgaben durch die Merkmale der unabhängigen Patentansprüche 1, 9 und 11. Vorteilhafte Ausgestaltungen eines Volumenzählers ergeben sich aus den jeweils nachgeordneten Unteransprüchen.

Der Kerngedanke der Erfindung besteht darin, dass in dem Volumenzähler ein weiterer Mischbehälter vorgesehen ist, in dem bereits eine Durchmischung des Alkohol/Wassergemischs, das von der Vorlage über den Zulauf zugeführt wird, stattfindet. Bevor das Alkohol/Wassergemisch dem eigentlichen Volumenbehälter zugeführt wird. Damit ist erreicht, dass in dem Alkohol/Wassergemisch, das im Volumenbehälter bezüglich seines Volumens gemessen wird, eine im Wesentlichen gleichmäßige Dichteverteilung vorliegt, so dass eine hiervon entnommene Probe den tatsächlichen Verhältnissen entspricht und die Messgenauigkeit erheblich verbessert ist.

In dem Volumenzähler können zwei oder mehrere Volumenbehälter vorgesehen sein, denen jeweils von dem Mischbehälter das Alkohol/Wassergemisch jeweils über eine oder mehrere absperrbare Zuleitungen zuführbar ist.

Die Durchmischung in dem Mischbehälter kann in an sich beliebiger Weise erfolgen. So ist es denkbar, in dem Mischbehälter einen Magnetrührer, einen magnetisch angetriebenen Rührer, anzuordnen, so dass in der Wandung des Mischbehälters keine Durchbrüche für Wellen oder dergleichen für ein Flügelrad im Inneren des Mischbehälters vorgesehen sein müssen. In besonders einfacher Weise jedoch kann eine selbsttätige Durchmischung durch in dem Mischbehälter angeordnete Leitbleche erfolgen. Diese sind derart im Inneren des Mischbehälters angeordnet, dass sowohl das vom Zulauf in den Mischbehälter strömende Alkohol/Wassergemisch an diesen entlang geführt wird, als auch das Alkohol/Wassergemisch beim Austreten aus dem Mischbehälter in Richtung auf den Volumenbehälter. Dabei fließt das Alkohol/Wassergemisch, das im Wesentlichen wie bei bekannten Volumenzählern drucklos fließt, von oben an der Innenseite der Mischbehälterwandung sowie an den Leitblechen entlang, so dass auch eine Sog- oder Wirbelbildung, die zum unerwünschten Eintrag von Luftblasen in das Alkohol/Wassergemisch führen könnte, vermieden ist.

In bevorzugter Weise erfolgt die Steuerung des Volumenzählers mit einer externen elektronischen Steuerung, die auch ein Zählwerk umfasst, das die Menge der in den Volumenbehältern erfassten Volumina anzeigt. Diese elektronische Steuerung steuert in vorteilhafter Weise Magnetventile zur Steuerung der Zu- und Abläufe aus den einzelnen Behältern im Volumenzähler an. Die Magnetventile, in einfacher Weise in 12-Volt- oder 24-Volt-Technik, sind dabei so ausgelegt, dass sie bei Stromausfall, also im stromlosen Zustand selbsttätig sperren, das heißt ein weiteres Zu- oder Ablaufen in einen der Behälter unterbunden ist.

Zur Entnahme einer Probe aus einem Volumenbehälter ist vorgeschlagen, dass ein Proben-Volumenrohr an dem Volumenbehälter angesetzt ist, das beim Befüllen des Volumenbehälters ebenfalls mit befüllt wird und über ein definiertes Volumen, z.B. 2 cm³ verfügt. Dieses Proben-Volumenrohr ist ebenfalls mit einem Magnetventil abgesperrt. Zur Entnahme der Probe wird das Magnetventil von der Steuerung geöffnet und die Probe fließt über ein Probenrohr in ein Proben-Sammelgefäß. Dieses kann mit einem Thermometer und/oder einer Einrichtung zur Dichtemessung versehen sein, wobei diese Messungen auch bereits im Bereich des Proben-Volumenrohr oder des Probenrohrs erfolgen können. Der zeitliche Ablauf ist hierbei derart, dass zuerst ein Absperrventil, vorzugsweise ebenfalls ein Magnetventil, am Volumenbehälter geöffnet wird, um den Volumenbehälter über einen Ablauf in einen außerhalb des Volumenbehälters angeordneten Auffangbehälter, z.B. einen Mittellaufbehälter, zu entleeren. Zeitverzögert wird dann das am Proben-Volumenrohr angeordnete Magnetventil geöffnet, um die Probe zu entnehmen. Prinzipiell kann dies aber auch gleichzeitig erfolgen.

Um den Volumenbehälter vollständig zu befüllen bzw. zu entleeren ist an dem Volumenbehälter obenseitig ein Entlüftungsventil vorgesehen, durch das Luft in den Volumenbehälter ein- und ausströmen kann. Ein derartiges Entlüftungsventil ist in einfacher Weise ein Schwimmerventil, bei dem ein Schwimmkörper durch das Alkohol/Wassergemisch im Volumenbehälter aufgrund des Auftriebs des Schwimmkörpers nach oben bewegt wird und auch gegen eine Federkraft die Entlüftung schließt. In einer anderen Ausgestaltungsform kann das Entlüftungsventil auch ein Entlüftungsröhrchen sein, das obenseitig an dem Volumenbehälter angeordnet ist und in den Mischbehälter hineinreicht, wobei die obenseitige Öffnung des Entlüftungsröhrchens höher liegen muss, als der maximale Füllstand des Alkohol/Wassergemischs im Mischbehälter.

Zur Verbesserung der Messgenauigkeit des Volumenzählers ist des Weiteren vorgeschlagen, dass dem Volumenbehälter ein Füllstandsfühler zugeordnet ist, der den Füllstand des Volumenbehälters erfasst. Dies kann in an sich bekannter Weise durch einen Füllstandsfühler mit zwei Elektroden erfolgen, der bei Umspülung der Elektroden mit Alkohol/Wassergemisch eine Änderung der elektrischen Leitfähigkeit registriert. In besonders vorteilhafter Weise ist der Füllstandfühler in Durchflussrichtung des Alkohol/Wassergemischs durch den Volumenzähler vor dem Magnetventil angeordnet, das den Zulauf des Alkohol/Wassergemischs in den Volumenbehälter steuert bzw. unterbricht.
Damit ist erreicht, dass bei Aktivierung des Füllstandsfühlers der Volumenbehälter bereits vollständig gefüllt ist. Bei bisherigen Anordnungen des Füllstandsfühlers in Durchlaufrichtung nach dem Absperrventil ergaben sich aufgrund des "Nachtröpfelns" aus Rohrleitungen stets Ungenauigkeiten in den gemessenen Volumina.
Es können an dem Mischbehälter auch zwei Füllstandsfühler angeordnet sein, wobei eine Betätigung des Magnetventiles bevorzugt nach dem Ansprechen von einem der beiden Füllstandsfühler erfolgt und der jeweils andere Füllstandsfühler die Funktion eines Sicherheitsschalters hat, falls am Ersteren eine Störung auftreten sollte.

In einer anderen Ausführungsform der Erfindung ist der Volumenzähler derart ausgebildet, dass anstatt des dem Volumenbehälter vorgeschalteten Mischbehälter lediglich eine gemeinsame Sammelleitung für zwei oder mehrere Volumenbehälter vorgesehen ist. Hierbei findet eine Durchmischung des Alkohol/Wassergemisches in der gemeinsamen Sammelleitung, die über Absperr- bzw.

Magnetventile für jeden Volumenbehälter verfügt, statt. Die gemeinsame Sammelleitung kann auch mit größerem Rohrquerschnitt ausgeführt sein, als die sonstigen Rohrleitungen im Volumenzähler, um in dem Volumen der Sammelleitung eine ausreichende Durchmischung zu erreichen.

Auch an dieser Ausführungsform können sämtliche vorstehend beschriebene Merkmale der Erfindung vorgesehen werden.

Eine dritte Ausführungsform des Volumenzählers sieht vor, dass an dem Gehäuse des Volumenzählers ein elektrisch betriebener Lüfter angeordnet ist, der für einen steten Luftdurchsatz im Inneren des Gehäuses sorgt. Dazu sind insbesondere weitere Lüftungsschlitze an dem Gehäuse ausgebildet, insbesondere an einer dem Lüfter gegenüberliegenden Seite des Gehäuses. Dabei ist der Lüfter derart betrieben, dass er Luft- bzw. Alkoholdämpfe aus dem Inneren des Gehäuses nach außen fördert. Die elektrische Steuerung des Volumenzählers kann hierbei derart ausgelegt sein, dass vor Betätigung weiterer elektrischer Schaltelemente im Inneren des Volumenzählers eine Vorlauf- oder Entlüftungszeit von z.B. einer Minute eingehalten wird, um eventuell vorhandene Dämpfe abzusaugen.
Auch diese Ausführungsform der Erfindung kann mit sämtlichen vorstehend beschriebenen Merkmalen der Erfindung versehen sein.

Im Rahmen der Erfindung ist es auch möglich, dass alle drei vorstehend beschriebenen Ausführungsformen miteinander kombiniert werden, das heißt insbesondere, dass an einem Volumenzähler mit einem gemeinsamen Mischbehälter für mehrere Volumenbehälter auch an dem Gehäuse ein Lüfter vorgesehen ist. Dabei sollen im Rahmen der Erfindung auch diejenigen Volumenzähler mitenthalten sein, die über keine Entnahmevorrichtung für Proben des Alkohol/Wassergemischs aus den Volumenbehältern verfügen.

Weitere Einzelheiten, Merkmale und Vorteile der Erfindung lassen sich dem nachfolgenden Beschreibungsteil entnehmen, in dem anhand von Zeichnungen Ausführungsbeispiele der Erfindung näher dargestellt sind. Es zeigen:
- **Figur 1**: einen Volumenzähler in schematischer Darstellung, und
- **Figur 2**: eine andere Ausführungsform eines Volumenzählers.

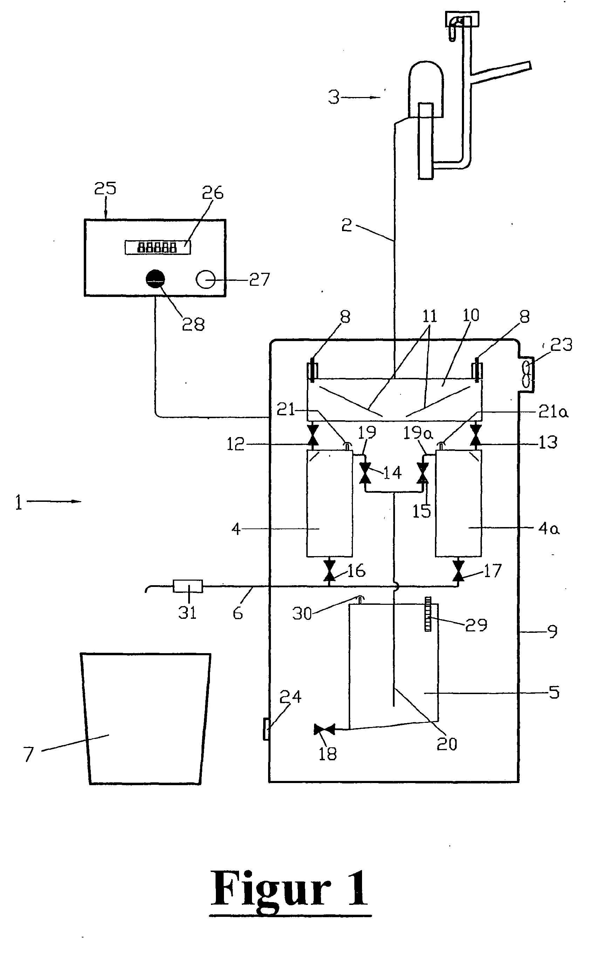

Bei dem in Figur 1 dargestellten Ausführungsbeispiel der Erfindung handelt es sich um einen Volumenzähler 1, wie er insbesondere in Verschlussbrennereien zur Erfassung der Menge sowie des Alkoholgehalts von Branntwein verwendet wird. Der Volumenzähler 1 steht über einen Zulauf 2 mit einer üblicherweise ebenfalls plombierten Vorlage 3, in der der Branntwein erzeugt wird, in Verbindung. Durch den Zulauf 2 fließt das Alkohol/Wassergemisch in den Volumenzähler 1. Den Volumenbehältern 4, 4a ist hier ein Mischbehälter 10 vorgeschaltet. Das bedeutet, dass das Alkohol/Wassergemisch zuerst in den Mischbehälter 10 geführt, an den im Inneren des Mischbehälters 10 angeordneten Leitblechen 11 selbsttätig durchmischt und erst dann den Volumenbehältern 4, 4a zugeführt wird. Dabei sind die Magnetventile 12, 13 solange geschlossen, bis der oder die Füllstandsfühler 8 anspricht/ansprechen und anzeigt/anzeigen, dass der Mischbehälter 10 im Wesentlichen voll ist. Anschließend wird das Magnetventil 12 geöffnet und der Volumenbehälter 4 vollständig befüllt. Dazu ist insbesondere das Volumen des Mischbehälters 10 größer als das Volumen des Volumenbehälters 4. Der Füllvorgang wird so lange weitergeführt, bis der Füllstandsfühler 8 erneut anspricht, nunmehr also Volumenbehälter 4 und Mischbehälter 10 beide voll sind. Dann wird durch die elektrische Steuerung 25, das Magnetventil 12 geschlossen und das Magnetventil 13 für den zweiten Volumenbehälter 4a geöffnet. Gleichzeitig oder geringfügig zeitverzögert dazu wird das Magnetventil 16 geöffnet, so dass das Alkohol/Wassergemisch aus dem Volumenbehälter 4 sich über den Ablauf 6 in den außerhalb des Volumenzählers 1 angeordneten Auffangbehälter, hier der Mittellaufbehälter 7, entleert. An dem Ablauf 6 kann auch eine Sicherung 31 gegen unbefugte Entnahme des Alkohol/Wassergemischs vorgesehen sein.

Ebenfalls gleichzeitig mit dem Öffnen des Magnetventils 16 oder kurz danach zeitversetzt wird das Magnetventil 14 geöffnet, so dass das Alkohol/Wassergemisch, das in dem Proben-Volumenrohr 19 definierten Volumens enthalten ist, sich über das Probenrohr 20 in den Proben-Sammelbehälter 5 entleert wird. An dem Behälter 5 kann ein Thermometer 29 und eine Einrichtung zur Bestimmung der Dichte des Alkohol/Wassergemischs vorgesehen sein. Eine selbsttätige Durchmischung der Proben kann mit gleichartigen Leitblechen ebenfalls vorgenommen werden. Eine Entleerung des Probenbehälters 5 kann über ein weiteres Ventil, z.B. ein Magnetventil 18, erfolgen.

Sämtliche vorstehend genannten Behälter 4, 4a, 5 und 10, bei Bedarf auch der Behälter 10, können mit Entlüftungsventilen 21, 21 a, 30 versehen sein.
Die Einrichtungen zur Messung der Dichte und/oder der Temperatur des Alkohol/Wassergemischs können auch an anderer Stelle im Volumenzähler 1 angeordnet sein.

Nachdem der zweite Volumenbehälter 4a und der Mischbehälter 10 voll gefüllt sind, was wiederum über den Füllstandsfühler 8 erfasst wird, wird das Magnetventil 13 geschlossen, das Magnetventil 17 geöffnet, gegebenenfalls vorher das noch offene Magnetventil 16 des ersten Volumenbehälters 4 geschlossen, und das Magnetventil 12 des ersten, nunmehr geleerten, Volumenbehälters 4 zu dessen neuer Befüllung wieder geöffnet.

Auch an dem zweiten Volumenbehälter 4a kann ein Proben-Volumenrohr 19a mit einem Magnetventil 15 vorgesehen sein.

An der Steuerung 25 ist ein nicht rückstellbares Zählwerk 26 vorgesehen, dass die Zyklen des Entleerens der Volumenbehälter 4, 4a und/oder das Gesamtvolumen zählt. Eine Signalleuchte 27 zeigt den Betriebszustand des Volumenzählers 1 an und erlischt insbesondere bei Stromausfall, wobei hier sämtliche Magnetventile 12 bis 18 selbsttätig sperren. Mit einer Bedientaste 28 an der Steuerung 25 ist der Volumenzähler 1 von außen steuerbar. Mit einer weiteren, im plombierten Gehäuse vorgesehenen Taste können auch alle Ventile 12 bis 18 geöffnet und der Volumenzähler 1 vollständig geleert werden. Das Gehäuse 9 des Volumenzählers 1 wird mit einem elektrischen Lüfter 23 vor und während des Betriebs durchlüftet, um das Entstehen explosiver Alkoholdämpfe im Inneren des Gehäuses 9 zu unterbinden. Somit können alle elektrischen Bauteile im Volumenzähler 1 in kostengünstiger, nicht explosionsgeschützter Form ausgebildet sein. Zusätzlich sind an dem Gehäuse 9 Lüftungsschlitze 24 vorgesehen.

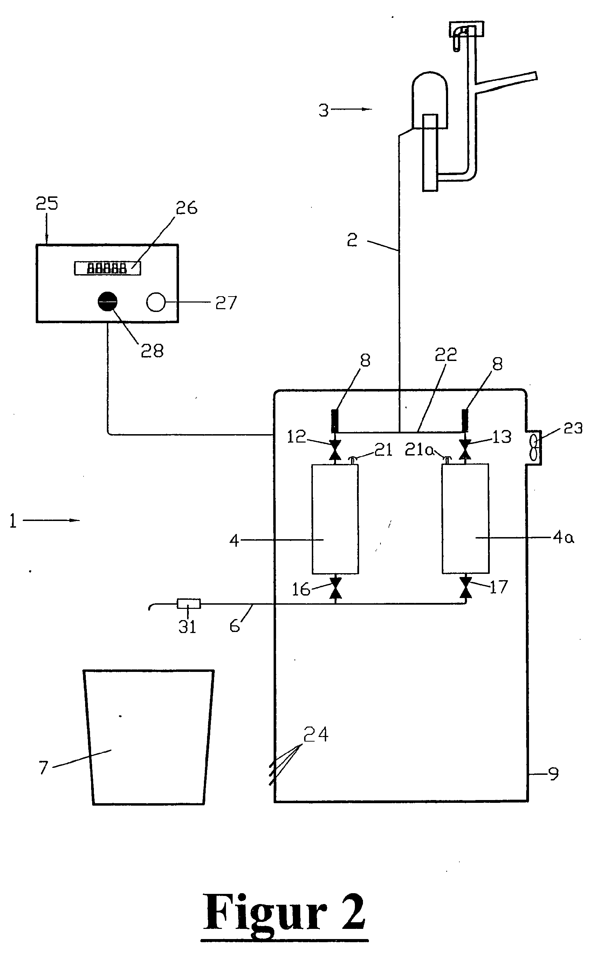

Bei dem in Figur 2 dargestellten Ausführungsbeispiel der Erfindung sind die entsprechenden Baugruppen/Komponenten aus Figur 1 mit den gleichen Bezugszeichen versehen. Hier ist der Volumenzähler 1 ohne Entnahmevorrichtung für Proben und entsprechend ohne Proben-Sammelbehälter 5 ausgebildet. Diese Ausführungsform soll jedoch auch im Sinne der Erfindung von dieser mit umfasst sein. Den beiden Volumenbehältern 4, 4a ist hier in Durchflussrichtung des Alkohol/Wassergemischs durch den Volumenzähler 1 eine gemeinsame Sammelleitung 22 vorgeschaltet, die jeweils mit Magnetventilen 12, 13 zu den Volumenbehältern 4, 4a absperrbar ist. Ein oder zwei Füllstandsfühler 8 erfasst/erfassen den Füllstand des Alkohol/Wassergemischs in der Sammelleitung 22 und öffnet/schließt / öffnen/schließen die Magnetventile 12, 13 derart, dass zuerst der eine Volumenbehälter 4 vollständig gefüllt wird, was dadurch angezeigt wird, dass bei geöffnetem Magnetventil 12 der Füllstandsfühler 8 anspricht. Das Magnetventil 12 wird anschießend geschlossen, und die Magnetventile 16 und 13 auch zeitversetzt zueinander geöffnet, so dass der Volumenbehälter 4a gefüllt und der Volumenbehälter 4 entleert wird.

Alle in der vorstehenden Beschreibung erwähnten sowie auch die allein aus den Zeichnungen entnehmbaren Merkmale sind weitere Bestandteile der Erfindung auch wenn sie nicht besonders hervorgehoben und in den Ansprüchen erwähnt sind.

Die Erfindung ist nicht auf das Ausführungsbeispiel beschränkt, sondern im Rahmen der Offenbarung vielfach variabel.

### Bezugszeichenliste

- 1: Volumenzähler
- 2: Zulauf in Pos. 4
- 3: Vorlage
- 4, 4a: Volumenbehälter
- 5: Proben-Sammelbehälter
- 6: Ablauf aus Pos. 4
- 7: Mittellaufbehälter
- 8: Füllstandsfühler
- 9: Gehäuse von Pos. 1
- 10: Mischbehälter
- 11: Leitblech in Pos. 10
- 12 bis 18: Magnetventile
- 19, 19a: Proben-Volumenrohr
- 20: Probenrohr
- 21, 21a: Entlüftungsventil an Pos. 4, 4a
- 22: Sammelleitung
- 23: Lüfter an Pos. 9
- 24: Lüftungsschlitze an Pos. 9
- 25: elektronische Steuerung für Pos. 1
- 26: Zählwerk
- 27: Signalleuchte an Pos. 25
- 28: Bedientaste an Pos. 25
- 29: Thermometer an Pos. 5
- 30: Entlüftungsventil an Pos. 5
- 31: Sicherung an Pos. 6

## Patentansprüche

1. Volumenzähler (1) für Verschlussbrennereien zur Bestimmung des Volumens und des Alkoholgehalts eines durchfließenden Alkohol/Wassergemischs mit
- einem Zulauf (2) für das Alkohol/Wassergemisch aus einer plombierten Vorlage (3) in einen Volumenbehälter (4) für das Alkohol/Wassergemisch mit definiertem Volumen,
- einem Proben-Sammelbehälter (5), der mit Proben des Alkohol/Wassergemischs befüllbar ist, wobei eine Entnahmevorrichtung jeweils eine Probe des Alkohol/Wassergemischs dem Volumenbehälter (4) entnimmt und dem Proben-Sammelbehälter (5) zuführt,
- einem Ablauf (6) aus dem Volumenbehälter (4), durch den das Alkohol/Wassergemisch einem außerhalb des Volumenzählers (1) angeordneten Auffangbehälter (7) zuführbar ist,
- einem plombierbaren Gehäuse (9),
**dadurch gekennzeichnet,**
**dass** dem Volumenbehälter (4) in Durchlaufrichtung des Alkohol/Wassergemischs durch den Volumenzähler (1) ein Mischbehälter (10) vorgeschaltet ist.

2. Volumenzähler nach Anspruch 1,
**dadurch gekennzeichnet, dass** zwei oder mehrere Volumenbehälter (4, 4a) vorgesehen sind.

3. Volumenzähler nach Anspruch 1 oder 2,
**dadurch gekennzeichnet, dass** der Mischbehälter (10) Mittel zur selbsttätigen mechanischen Durchmischung des Alkohol/Wassergemischs aufweist, insbesondere Leitbleche (11) im Inneren des Mischbehälters (10).

4. Volumenzähler nach einem der vorhergehenden Ansprüche,
**dadurch gekennzeichnet,**
**dass** Magnetventile (12 bis 18) zur Steuerung der Zu- und Abläufe vorgesehen sind, insbesondere Magnetventile (12 bis 18), die im stromlosen Zustand sperren.

5. Volumenzähler nach einem der vorhergehenden Ansprüche,
**dadurch gekennzeichnet,**
**dass** die Entnahmevorrichtung ein mit einem Magnetventil (14, 15) absperrbares Proben-Volumenrohr (19, 19a) am Volumenbehälter (4, 4a) umfasst, und die Probe dem Proben-Sammelbehälter (5) mit einem Probenrohr (20) zuführbar ist.

6. Volumenzähler nach einem der vorhergehenden Ansprüche,
**dadurch gekennzeichnet,**
**dass** am Volumenbehälter (4, 4a) ein Entlüftungsventil (21, 21a) vorgesehen ist.

7. Volumenzähler nach Anspruch 6,
**dadurch gekennzeichnet,**
**dass** das Entlüftungsventil (21, 21a) ein Schwimmerventil oder ein mit dem Mischbehälter (10) in Verbindung stehendes Entlüftungsrohr ist.

8. Volumenzähler nach einem der vorhergehenden Ansprüche,
**dadurch gekennzeichnet,**
**dass** in Durchlaufrichtung des Alkohol/Wassergemischs ein oder mehrere Füllstandsfühler (8) demjenigen Magnetventil (12), das den Zulauf in den Volumenbehälter (4) steuert, vorgeschaltet ist/sind.

9. Volumenzähler (1) für Verschlussbrennereien zur Bestimmung des Volumens und des Alkoholgehalts eines durchfließenden Alkohol/Wassergemischs mit
- einem Zulauf (2) für das Alkohol/Wassergemisch aus einer plombierten Vorlage (3) in einen Volumenbehälter (4) für das Alkohol/Wassergemisch mit definiertem Volumen,
- einem Proben-Sammelbehälter (5), der mit Proben des Alkohol/Wassergemischs befüllbar ist, wobei eine Entnahmevorrichtung jeweils eine Probe des Alkohol/Wassergemischs dem Volumenbehälter (4) entnimmt und dem Proben-Sammelbehälter (5) zuführt,
- einem Ablauf (6) aus dem Volumenbehälter (4), durch den das Alkohol/Wassergemisch einem außerhalb des Volumenzählers (1) angeordneten Auffangbehälter (7) zuführbar ist,
- einem plombierbaren Gehäuse (9),
**dadurch gekennzeichnet,**
**dass**
- zwei oder mehrere Volumenbehälter (4, 4a) vorgesehen sind,
- der Zulauf (2) des Alkohol/Wassergemischs in die Volumenbehälter (4, 4a) über eine gemeinsame Sammelleitung (22) erfolgt.

10. Volumenzähler nach Anspruch 9,
**dadurch gekennzeichnet,**
**dass** der Volumenzähler (1) entsprechend einem oder mehreren der Ansprüche 2 bis 8 ausgebildet ist.

11. Volumenzähler (1) für Verschlussbrennereien zur Bestimmung des Volumens und des Alkoholgehalts eines durchfließenden Alkohol/Wassergemischs mit
- einem Zulauf (2) für das Alkohol/Wassergemisch aus einer plombierten Vorlage (3) in einen Volumenbehälter (4) für das Alkohol/Wassergemisch mit definiertem Volumen,
- einem Proben-Sammelbehälter (5), der mit Proben des Alkohol/Wassergemischs befüllbar ist, wobei eine Entnahmevorrichtung jeweils eine Probe des Alkohol/Wassergemischs dem Volumenbehälter (4) entnimmt und dem Proben-Sammelbehälter (5) zuführt,
- einem Ablauf (6) aus dem Volumenbehälter (4), durch den das Alkohol/Wassergemisch einem außerhalb des Volumenzählers (1) angeordneten Auffangbehälter (7) zuführbar ist,
- einem plombierbaren Gehäuse (9),
**dadurch gekennzeichnet,**
**dass** das Gehäuse (9) mit einem Lüfter (23) be- und entlüftbar ist.

12. Volumenzähler nach Anspruch 11,
**dadurch gekennzeichnet,**
**dass** der Volumenzähler (1) entsprechend einem oder mehreren der Ansprüche 2 bis 8 ausgebildet ist.
